# FASCICULE DE BREVET EUROPEEN

(11) **EP 2 734 345 B1**
(45) Date de publication et mention de la délivrance du brevet: **20.01.2016**
(21) Numéro de dépôt: 12743507.1
(22) Date de dépôt: 12.07.2012
(51) Int. Cl.: B26B 15/00, B23D 29/02, F16H 25/22, H02G 1/00

(54) **OUTIL ÉLECTROMÉCANIQUE PORTATIF**
TRAGBARES ELEKTROMECHANISCHES WERKZEUG
PORTABLE ELECTROMECHANICAL TOOL

(30) Priorité: 19.07.2011 FR 1156551
(43) Date de publication de la demande: 28.05.2014
(73) Titulaire: Mage Application, 38640 Claix (FR)
(72) Inventeur: LORINI, Marcel, F-69126 Brindas (FR)
(74) Mandataire: Schmidt, Martin Peter
(86) Numéro de dépôt international: PCT/FR2012/051658
(87) Numéro de publication internationale: WO 2013/011230

(56) Documents cités:
- WO-A1-03/048609
- WO-A1-2006/018487
- DE-A1- 2 807 952
- US-A- 3 178 816
- US-A- 3 461 555
- US-A- 5 235 750
- US-A1- 2007 261 252
- US-B1- 6 552 522

## Description

### Domaine de l'invention

La présente invention concerne un outil électromécanique portatif du type comportant un boîtier portatif à partir duquel fait saillie une tête de l'outil actionnée en mouvement par rapport au boîtier par un moteur électrique alimenté par une batterie, outil qui est apte à effectuer des opérations de coupe, de sertissage, de d'écartement, d'obturation, etc., plus particulièrement des opérations nécessitant l'application d'efforts importants.

### Etat de la technique

Un tel outil peut être un outil de sertissage des câbles électriques qui doit exercer une force d'environ six à douze tonnes. Le document FR 2 644 383 décrit un outil de sertissage des câbles électriques qui se présente sous la forme générale d'un pistolet dont la poignée contient un moteur électrique et un réducteur et dont le corps contient la batterie d'accumulateurs et une chambre à huile, ainsi qu'un moteur hydraulique se prolongeant par la tête de l'outil. Une gâchette de commande permet la mise en marche du moteur électrique. Fonctionnant à satisfaction, on s'est quand même rendu compte que l'entraînement hydraulique de l'outil posait de problèmes d'étanchéité, de dégradation de l'huile, des flexibles, ce qui avait comme conséquence des coûts d'entretien élevés de l'outil.

On connaît par ailleurs du document US 4 418 562 un outil de compression ou de coupe électroportatif comportant un moteur électrique couplé via un réducteur à engrenages à un pignon qui transmet le mouvement à une roue de transmission de puissance. Ladite roue comporte une came à excentrique qui déplace deux mâchoires pivotantes à l'extrémité de l'outil. L'outil comprend par ailleurs un circuit électronique de commande et de protection du moteur en cas de surcharge. L'inconvénient de cet outil est que le déplacement transmis par la came est assez faible, ce qui limite l'usage de l'outil avec des têtes à mâchoires pivotantes à actionnement radial ce qui a pour effet une assez faible amplitude d'ouverture de ses mâchoires.

Le document WO 2006/01847 décrit un outil électromécanique portatif permettant une course plus importante de la tête de l'outil. L'outil comprend un moteur électrique qui entraîne en rotation une vis à billes qui permet de transformer le mouvement de rotation de l'arbre moteur en un mouvement longitudinal de translation de la vis. Une telle vis à billes étant apte à développer un effort important, l'outil est également muni des moyens permettant de protéger le moteur en cas de fonctionnement à vide. Tout en étant apte à transmettre des efforts importants à la pièce soumise à son action, cet outil trouve ses limites lorsqu'une grande vitesse de rotation doit appliquée à la vis ou lorsqu'une grande précision de positionnement de la tête de l'outil, respectivement de ses parties mobiles, est souhaitée. Par ailleurs, l'encombrement de la partie de transmission de l'outil est assez important, ce qui est préjudiciable pour le gabarit général d'un outil portatif.

### Objet de l'invention

Le but de l'invention est de remédier au moins en partie à ces inconvénients et de proposer un outil électromécanique portatif qui est apte à transmettre des efforts importants avec des grandes vitesses et des grandes accélérations de la tête de l'outil, pour un déplacement précis de celle-ci, tout en présentant un faible encombrement et une durée de vie augmentée de l'outil.

Un autre but de l'invention est de proposer un outil électromécanique portatif robuste, présentant une bonne rigidité et une bonne résistance aux chocs, tout en présentant une tête de travail apte à développer une course importante, de manière très précise.

Un autre but de l'invention est un outil électromécanique portatif qui a un poids réduit par rapport aux outils existants, qui est apte à fonctionner de manière fiable dans le temps, tout en pouvant être fabriqué de manière économique en grande série.

Un autre but de l'invention est de proposer un outil électromécanique portatif apte à couper de manière rapide et efficace des câbles électriques du réseau souterrain qui peuvent être sous tension, tout en étant de fonctionnement sécuritaire pour le personnel l'utilisant.

Ces buts sont atteints avec un outil électromécanique portatif comportant un boîtier renfermant un moteur électrique à courant continu alimenté par batterie d'accumulateurs, un réducteur mécanique entraîné par l'arbre de sortie dudit moteur qui actionne une tête de travail moyennant un dispositif de transformation du mouvement de rotation du moteur en un mouvement de translation longitudinale qui est transmis à ladite tête de travail ou à une partie mobile de celle-ci, du fait que ledit dispositif de transformation comporte une vis à rouleaux satellites, ladite vis comportant une partie filetée qui est entraînée par ledit réducteur en rotation pour transmettre le mouvement via des rouleaux satellites à un écrou fileté qui entraîne une partie mobile de ladite tête de travail en translation.

Par dispositif de transformation comportant une vis à rouleaux satellites on comprend un dispositif comprenant une vis centrale qui présente un filetage extérieur à entrées multiples, un écrou concentrique à la vis présentant un filetage intérieur identique à celui de la vis et plusieurs rouleaux satellites, agencés entre la vis et l'écrou, chaque rouleau ayant un filetage extérieur à une entrée, dont l'angle d'hélice correspond à celui de l'écrou. En fonctionnement, en faisant tourner la vis centrale et en immobilisant en translation l'écrou, on obtient un déplacement en translation longitudinale de ce dernier. Selon l'invention, le mouvement de translation longitudinale de l'écrou entraîne la tête de travail, ou une partie mobile de celle-ci, et lui permet la transmission d'un effort donné, dans une direction choisie, avec une course donnée, le mouvement transmis pouvant être réversible.

Ainsi, un tel outil est portatif et autonome, il permet de transformer le mouvement de rotation du moteur électrique d'entraînement en un mouvement de translation longitudinale qui est imprimé à la tête de travail de l'outil ou à une partie mobile de la tête de travail qui, à son tour, entraîne en mouvement d'autres éléments de la tête de travail, telles des lames de coupe en un mouvement de pivotement, tout en permettant la transmission de grands efforts, même lorsque la vis tourne à grande vitesse ou lorsque des accélérations importantes lui sont imprimées, et ceci pour un déplacement précis de la tête de travail. En effet, de par sa construction, les capacités de charge statique et dynamique d'un mécanisme de type vis à rouleaux satellites sont nettement supérieures à tout autre mécanisme à vis, notamment du type comportant une vis à billes. De surcroît, le pas de la vis n'étant plus influencé par le diamètre des billes, il peut être facilement adapté à l'application souhaitée, pour obtenir des performances accrues de fonctionnement de l'outil, notamment de précision de déplacement de l'outil, ainsi que d'optimisation du gabarit de celui-ci.

Ainsi, on obtient un outil pouvant développer un effort important, comparable à celui des outils à entraînement hydraulique, pour un poids réduit de l'outil et une meilleure maniabilité de celui-ci, tout en lui permettant de s'affranchir des problèmes liés à un entraînement hydraulique, tels la dégradation des huiles, l'étanchéité des circuits hydrauliques de l'outil, la dégradation des flexibles, voir le risque d'intoxication par les huiles pour le personnel l'utilisant.

Un tel outil trouve son utilisation dans des opérations qui nécessitent de réaliser simultanément un déplacement de la tête de travail et l'application d'une force à l'objet soumis à l'action de l'outil, notamment pour effectuer des opérations de sertissage des câbles électriques ou des tuyauteries, des opérations de coupe des végétaux tels qu'elles sont réalisés avec des sécateurs ou de élagueurs, des opérations de désincarcération ou d'ouverture des portes blindées effectuées par les pompiers pour délivrer des personnes, des outils de coupe de câbles électriques, tels les câbles du réseau souterrain qui peuvent être sous tension, et d'autres.

De préférence, le mouvement de rotation est transmis par le réducteur mécanique à un arbre principal dont l'une des extrémités comporte un pignon d'entraînement qui reçoit le mouvement d'un pignon de renvoi qui est en prise avec un pignon moteur dudit réducteur, et ladite partie filetée de la vis est réalisée à l'extrémité opposée dudit arbre principal.

Un tel entraînement par pignon de renvoi permet d'agencer en parallèle, d'une part, le moteur et son réducteur et, d'autre part, l'arbre principal et de réduire ainsi le gabarit, notamment la longueur, de l'outil.

Avantageusement, le diamètre externe de ladite partie filetée est compris entre 25 et 35 mm et il comporte une partie filetée de profil triangulaire ayant un pas droit compris entre 3 et 6 mm et cinq entrées.

Il a été constaté qu'un tel outil arrivait à transmettre des efforts importants à la partie mobile de la tête de travail, tout en ayant un encombrement réduit et un faible poids.

Dans un exemple préféré de réalisation de l'invention, ladite partie mobile entraîne deux lames mobiles à profil circulaire en un mouvement de rotation autour d'un axe perpendiculaire à l'axe longitudinal de ladite partie filetée.

On peut, certes, imprimer le mouvement de translation de la partie mobile de la tête de travail directement à l'objet soumis à l'action de l'outil, comme dans le cas d'un outil de compression ou de désincarcération. Dans une variante préférée de réalisation de l'invention, le mouvement de translation de la partie mobile de la tête de travail est imprimé à un mécanisme articulé qui entraîne en un mouvement de fermeture et d'ouverture deux lames de la tête de travail. Un tel outil peut alors avantageusement être utilisé pour réaliser des opérations de coupe de divers objets agencés entre ses lames.

Avantageusement, l'une des lames présente un pique câble protubérant situé sensiblement au centre de ladite lame et relié à une tresse de mise à la terre.

Un tel outil est avantageusement utilisé pour réaliser la coupe des câbles électriques, tels les câbles des réseaux souterrains.

De préférence, l'outil de l'invention comporte un dispositif de positionnement et de verrouillage qui est monté pivotant, sous l'action d'au moins un ressort de rappel, selon un axe parallèle à l'axe de rotation desdites lames.

Un tel dispositif permet de faciliter l'introduction des câbles entre les lames, d'en assurer le verrouillage automatique et de faciliter la manipulation de l'outil.

Avantageusement, lesdites lames sont aptes à réaliser une course comprise entre 80 mm et 100 mm dans environ 60 secondes. Un tel outil permet donc de réaliser des opérations de coupe de câbles métalliques de diamètres importants, en développant des efforts importants en relativement peu de temps.

De préférence, l'outil de l'invention comporte deux capteurs inductifs permettant de détecter la position d'ouverture et de fermeture des lames qui sont reliés à une carte électronique de commande du moteur électrique. Une telle carte électronique permet de gérer facilement le fonctionnement de l'outil.

Avantageusement, ladite carte électronique est réalisée de manière à pouvoir vérifier et commander l'état de charge de la batterie d'accumulateurs avant d'autoriser la mise en marche de l'outil. Ceci permet d'offrir un déplacement à vitesse constante des lames de l'outil.

Dans une variante préférée de réalisation de l'outil de l'invention, ce dernier comporte un dispositif de commande à distance de la carte électronique. Ceci permet une utilisation sécuritaire pour l'opérateur.

### Description des figures

La figure 1 illustre une vue en perspective d'un outil électromécanique portatif selon un mode préféré de réalisation de l'invention.
La figure 2 illustre une vue en perspective éclatée de l'outil électromécanique portatif de la figure 1.
La figure 3 illustre une vue en coupe axiale de l'outil électromécanique de la figure 1.

**Liste des repères :**

| | |
|---|---|
| 1 | Outil pique et coupe câble |
| 2 | Boîtier |
| 3 | Tête de travail |
| 4 | Batterie |
| 5 | Partie mobile de la tête de travail |
| 7 | Articulation |
| 8 | Lame inférieure |
| 9 | Lame supérieure |
| 10 | Pique câble |
| 11 | Tresse |
| 12 | Dispositif de positionnement et verrouillage |
| 13 | Axe de pivotement |
| 14 | Capot |
| 15 | Ressort de rappel |
| 16 | Patte d'accroche |
| 17 | Paroi transversale |
| 18 | Découpage arrondi |
| 19 | Guide-lame |
| 20 | Poignée |
| 21 | Connecteur |
| 22 | Carte électronique |
| 23 | Moteur électrique |
| 24 | Arbre de sortie moteur électrique |
| 25 | Réducteur mécanique |
| 26 | Arbre de sortie réducteur |
| 27 | Interface |
| 28 | Pignon moteur |
| 29 | Pignon de renvoi |
| 30 | Pignon d'entraînement |
| 31 | Arbre principal |
| 32 | Couvercle de protection |
| 33 | Roulements à billes |
| 34 | Manchon de fixation |
| 35 | Roulement à butées et rouleaux cylindriques |
| 36 | Carter cylindrique |
| 37 | Axe pignon de renvoi |
| 38 | Bride |
| 39 | Epaulement |
| 40 | Dispositif de transformation |
| 41 | Partie filetée |
| 42 | Ecrou fileté |
| 43 | Rouleaux satellites |
| 44 | Partie filetée externe |
| 45 | Clavette |
| 46 | Corps de chape |
| 47 | Douille de quidage |
| 48 | Partie avant |
| 49 | Chape |
| 50 | Tige transversale |
| 51 | Maillon |
| 52 | Axe |
| 53 | Tourillon |
| 54 | Bague |

### Description détaillée de l'invention

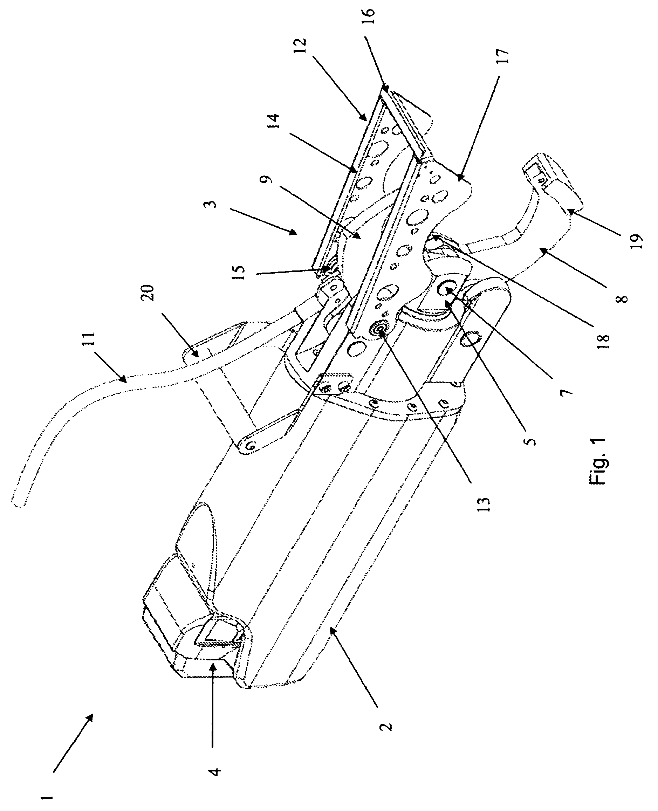

La figure 1 illustre un outil électromécanique portatif selon un mode préféré de réalisation de l'invention qui est un outil pique et coupe câble 1 destiné à couper des câbles électriques, par exemple les câbles du réseau souterrain de basse et moyenne tension qui peuvent être sous tension, après avoir effectué en préalable un piquage pour s'assurer de l'absence de tension sur ces câbles. L'outil 1 comprend un boîtier 2, de forme générale tubulaire allongée, muni d'une tête de travail 3 à son extrémité avant et d'une batterie 4 à son extrémité arrière. La batterie 4 est une batterie rechargeable amovible et alimente en énergie un moteur électrique prévu pour entraîner en translation une partie mobile 5 de la tête de travail 3, via un réducteur et un dispositif de transformation de mouvement, tel qu'il sera expliqué par la suite.

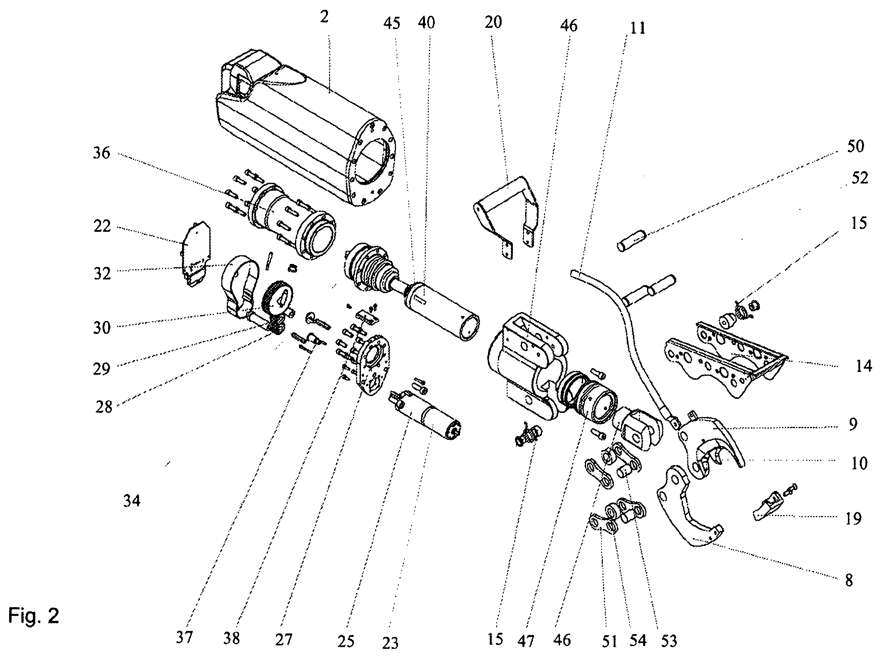

Dans l'exemple représenté aux figures annexées, la partie mobile 5 comprend une partie avant qui supporte une articulation pivotante 7 de type charnière autour de laquelle sont montées à possibilité de rotation deux lames coupantes, notamment une lame inférieure 8 et une lame supérieure 9. Au centre de la lame supérieure 9 fait saillie un couteau appelé pique câble 10 (fig. 2) qui est connecté, moyennant une cosse de fixation, à une tresse 11 de mise à la terre. A l'extrémité de la lame inférieure 8 est fixé un guide-lame 19 permettant de guider la lame supérieure 9 lors de son mouvement de la coupe. L'outil 1 comprend également une poignée 20 permettant de faciliter le transport et la manipulation de l'outil 1.

L'outil 1 comprend également un dispositif de positionnement et de verrouillage 12 automatique des câbles à couper qui est constitué d'un capot 14 monté pivotant, sous la force de deux ressorts de rappel 15, autour d'un axe 13 perpendiculaire à l'axe longitudinal de l'outil 1. Le capot 14 a, tel que vu de dessus, une forme générale en U entourant les lames 8,9 et dont la base constituant la partie frontale du capot 14 comprend une patte d'accroche 16 permettant à l'utilisateur de soulever le capot 14 en vue de l'introduction du câble à couper entre les lames. Le capot 14 présente, sur les côtés des parois transversales 17 présentant un découpage 18 de forme arrondie qui permet de maintenir le câble à couper en position au sein de l'outil 1. Le capot 14 permet également un verrouillage du câble à couper, le capot étant maintenu en position normalement fermée par les ressorts de rappel 15.

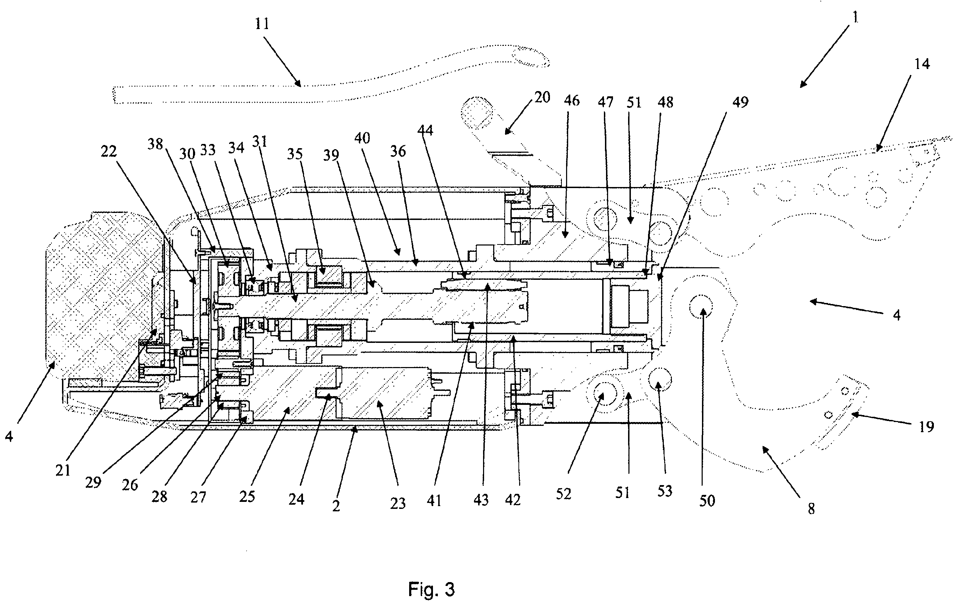

Les divers composants de l'outil 1 sont mieux visibles à la figure 3. Ainsi, le boîtier 2 se termine à son extrémité arrière par un connecteur 21 de batterie comportant des plots de connexions avec ceux de la batterie 4. La batterie 4 est rechargeable et amovible, et, à titre d'exemple, elle peut être du type Li-ion et avoir une tension de 25,2 V. La batterie 4 alimente une carte électronique 22 de commande du fonctionnement de l'outil et fournit l'alimentation en énergie électrique d'un moteur électrique 23 à courant continu. L'arbre de sortie 24 du moteur électrique 23 entraîne en rotation un réducteur mécanique 25.

La carte électronique 22 gère le fonctionnement de l'outil 1 en assurant les fonctions de : pilotage du moteur pour la fermeture et l'ouverture des lames, le contrôle et la stabilisation de la vitesse du moteur 23 sur une valeur de consigne préétablie, le contrôle de la position des lames 8,9 pour déterminer la fin de l'opération de coupe, le contrôle et l'affichage de l'état de la batterie 4 afin d'évaluer si la batterie peut fournir suffisamment de puissance pour démarrer une opération de piquage et de coupe de câble et décider ensuite de lancer l'opération ou alors de changer la batterie, voir procéder à sa recharge, et, éventuellement, la communication avec un récepteur radio bidirectionnel de commande à distance de l'outil.

A titre d'exemple, un tel moteur 23 est alimenté à une tension de 24 V, à une puissance d'environ 200 W et un diamètre d'environ 40 mm et est apte à fonctionner dans les deux sens de rotation. Le réducteur de l'invention doit pouvoir fournir la puissance mécanique pour un couple mécanique élevé et une vitesse réduite. A titre d'exemple, le réducteur 25 de l'invention fournit un couple compris entre 3 à 15 Nm et a un diamètre d'environ 42 mm.

Le moteur 23 et le réducteur 25 sont supportés par une interface 27 fixée à l'intérieur du boîtier 2. La carte électronique 22 est montée moyennant une bride 38 et des vis de fixation sur l'interface 27. L'arbre de sortie 26 du réducteur 25 fait tourner un pignon moteur 28 fixé sur ce dernier, pignon moteur qui entraîne, via un pignon de renvoi 29 porté par un arbre de renvoi 37 supporté par l'interface 27, un pignon d'entraînement 30 en rotation d'un arbre principal 31 faisant partie d'un dispositif de transformation 40. Un couvercle de protection 32 est fixé sur l'interface 27 et permet de renfermer les pignons 28, 29, 30 dans un espace confiné.

Le dispositif de transformation 40 a pour rôle de transformer le mouvement de rotation de l'arbre principal 31 en un mouvement de translation d'un écrou fileté 42 placé autour et coaxialement à l'arbre principal 31.

L'arbre principal 31 comporte une première zone de support au sein de l'outil, s'étendant sur environ la moitié de sa longueur, elle est comprise entre son extrémité arrière et un épaulement 39 ; ainsi qu'une deuxième zone active comportant une partie filetée 41 s'étendant sur au moins la moitié de la longueur de la zone active, à partir de l'extrémité avant de l'arbre principal 31. L'arbre principal 31 est supporté sur des paliers à roulements à billes 33 au sein d'un manchon 34 servant de fixation à l'interface 27 et sur des roulements à rouleaux cylindriques et à butées axiales 35 à l'intérieur d'un carter cylindrique 36. Le carter cylindrique 36 comporte à son extrémité arrière un flasque moyennant lequel il est fixé par des vis de fixation (fig.2) au flasque correspondant du manchon de fixation 34.

Selon l'invention, la partie filetée 41 de l'arbre principal 31 transmet le mouvement de rotation à l'écrou fileté 42 moyennant des rouleaux satellites 43. Les rouleaux satellites 43 sont placés longitudinalement entre l'arbre principal 31 et l'écrou fileté 42 et présentent un filetage extérieur qui est en prise avec d'une part le filetage de la partie filetée 41 de l'arbre 31 et d'autre part avec le filetage dudit écrou fileté. Les rouleaux satellites 43 présentent également à chacune de leurs extrémités des dents d'engrenage qui viennent en prise avec les dents d'engrenage de la partie filetée 41 afin d'éviter tout glissement longitudinal entre les deux et de synchroniser ainsi les rouleaux satellites entre eux.

Dans l'exemple représenté aux figures, l'écrou fileté 42 présente un diamètre extérieur de 70 mm, une partie interne filetée ayant un diamètre de 49,76 mm et une longueur d'environ 34 mm. La partie interne filetée de l'écrou 42 présente un pas à droite de 5 mm avec cinq entrées. Pour des raisons de clarté des dessins, un seul rouleau satellite 43 a été représenté à la figure 3, toutefois dans l'exemple illustre aux figures annexées, cinq rouleaux satellites transmettent le mouvement entre l'arbre 31 et l'écrou 42. Chaque rouleau présente une partie filetée externe 44 qui s'étend sur une longueur d'environ 30 mm, pour un diamètre de 12 mm, un pas de 1 mm, et présente une seule entrée. La partie filetée 41 de l'arbre principal 31 présente une longueur d'environ 100 mm, un diamètre d'environ 27 mm, un pas à droite de 5 mm avec 5 entrées. Le filetage est triangulaire et présente un angle au sommet de 90°.

L'écrou fileté 42 présente des moyens de blocage en rotation réalisés sous forme de deux clavettes 45 qui s'insèrent dans des canaux correspondants (non visibles sur les dessins) pratiqués dans les parois du carter cylindrique 35. Ainsi, lors de l'entraînement en rotation de l'arbre principal 31, la partie filetée 41 de ce dernier entraîne en rotation les rouleaux satellites 43 qui viennent en prise avec l'écrou fileté 42 qui, étant bloqué en rotation, effectue un mouvement de translation longitudinale le long de l'axe longitudinal de l'arbre principal 31.

L'écrou fileté 42 est guidé dans son mouvement de translation à l'intérieur d'un corps de chape 46 par une douille de guidage 47 fixée à l'extrémité avant 48 de l'écrou fileté 42. Une chape 49 est fixée par vissage à l'intérieur de la partie avant 48 et permet de la rendre solidaire en mouvement de l'écrou 42. La chape 49 supporte en sa partie centrale une tige transversale 50 montée fixe par rapport à la chape 49 et agencée perpendiculairement à l'axe principal 31. Les lames inférieure 8 et supérieure 9 sont montées à possibilité de rotation autour de la tige transversale 50.

Les lames inférieure 8 et supérieure 9 ont une forme générale en arc de cercle, elles sont amenées à tourner autour de l'axe de la tige transversale 50 et autour de l'axe d'un tourillon 53 d'un ensemble de montage au corps de chape 46. L'ensemble de montage de chaque lame au corps de chape 46 comporte deux maillons 51 écartés par une bague 54 qui sont montés pivotants, à leur extrémité arrière, autour d'un axe 52 transversal à l'axe longitudinal du corps de chape 46 et, à leur extrémité avant supportent l'axe du tourillon 53. En fonctionnement, le mouvement de translation longitudinale alternative imprimé à la chape 49 provoque un mouvement de rotation des lames 8 et 9 autour de l'axe de la tige transversale 50 et donc la fermeture et l'ouverture des lames 8,9.

Les lames 8,9 sont de préférence réalisées en acier traité et leur forme en arc de cercle permet un bon centrage des câbles à couper lors de leur mise en place au sein de l'outil. Dans l'exemple représenté aux figures, les lames sont conçues de manière à ce que leurs formes et leurs dimensions puissent permettre le centrage correct, puis la coupe, des câbles ayant des diamètres compris entre 20 mm et 90 mm.

A titre d'exemple, un tel outil a des dimensions 715x290x130 mm (on comprend longueur x hauteur x largeur) et un poids d'environ 15 kg. Il peut développer une force d'environ 80 kN et effectuer une course comprise entre 80 mm et 100 mm en environ 60 secondes.

En fonctionnement, la carte électronique du moteur commence par effectuer une vérification de l'état de la batterie 4 afin de s'assurer que la batterie est chargée et qu'elle peut alimenter en énergie le moteur 23. Les lames étant en position d'ouverture, on insère un câble électrique à couper, après avoir préalablement soulevé le capot 14 du dispositif de positionnement 12. Une fois relâché, le capot 14 poussé par les ressorts 15 positionne automatiquement correctement le câble à couper entre les lames. Le mouvement de fermeture des lames 8,9 peut alors être commandé.

Lors du mouvement de fermeture des lames 8,9, le pique câble 10 qui est solidaire de la lame supérieure 9 est le premier à venir en contact avec le câble à couper. Le pique câble 10 permet de s'assurer de l'absence de tension sur les câbles isolés des réseaux souterrains, en limitant à un défaut monophasé le piquage d'un câble multipolaire, en permettant ainsi le déclenchement des sécurités situées en amont, avant de produire de court-circuit biphasé ou triphasé. La construction de la tête de travail 4, notamment le profil des lames 8,9 et la construction et l'agencement du pique câble 10, est réalisée de manière à ce que l'intervalle de temps entre le moment où le pique câble 10 est en contact avec la première phase et celui où il atteint la deuxième phase doit être au moins égal à 1,2 s et ceci quel que soit le type de câble multipolaire. Ainsi, les protections du réseau peuvent réagir avant que l'une des lames 8,9 n'ait atteint une deuxième phase.

Dans une variante de réalisation de l'invention, la carte électronique 22 commande l'arrêt du moteur électrique 23 pendant un laps de temps lorsque le piquage à lieu sur une phase sous tension.

Le mouvement de fermeture complète des lames 8,9 continue pour couper le câble. Ensuite, les lames 8,9 sont commandées en ouverture, l'outil étant ainsi prêt pour une nouvelle opération.

De préférence, l'outil 1 de l'invention comporte deux capteurs inductifs de fin de course, notamment un premier capteur inductif pour détecter la position d'ouverture des lames et un deuxième capteur inductif pour détecter la position de fermeture des lames. Ces capteurs sont positionnés sur le carter cylindrique 36 et permettent de renseigner la carte électronique 22 de la position axiale de l'écrou fileté 42. En fonction de l'information reçue de ces capteurs, la carte électronique commande le sens de rotation du moteur électrique 23 pour réaliser l'ouverture, respectivement la fermeture des lames.

Dans une variante préférée de réalisation de l'invention, l'outil 1 est commandé à distance, moyennant une télécommande, ayant par exemple une portée de 20m, ce qui permet à l'opérateur de travailler à distance en toute sécurité. Une telle télécommande peut comporter des boutons poussoirs permettant de commander l'alimentation du moteur électrique et le sens, pour réaliser l'ouverture ou la fermeture des lames.

D'autres variantes et modes de réalisation de l'invention peuvent être envisagés sans sortir du cadre de ses revendications.

## Revendications

1. Outil électromécanique portatif comportant un boîtier (2) renfermant un moteur électrique (23) à courant continu alimenté par batterie d'accumulateurs (4), un réducteur mécanique (25) entraîné par l'arbre de sortie dudit moteur qui actionne une tête de travail (3) moyennant un dispositif de transformation (40) du mouvement de rotation du moteur (23) en un mouvement de translation longitudinale qui est transmis à ladite tête de travail (3), **caractérisé en ce que** ledit dispositif de transformation (40) comporte une vis à rouleaux satellites, ladite vis comportant une partie filetée (41) qui est entraînée par ledit réducteur en rotation pour transmettre le mouvement via des rouleaux satellites (43) à un écrou fileté (42) qui entraîne une partie mobile (5) de ladite tête de travail (3) en translation.

2. Outil selon la revendication 1, **caractérisé en ce que** le mouvement de rotation est transmis par le réducteur mécanique (25) à un arbre principal (31) dont l'une des extrémités comporte un pignon d'entraînement (30) qui reçoit le mouvement d'un pignon de renvoi (29) qui est en prise avec un pignon moteur (28) dudit réducteur, et **en ce que** ladite partie filetée (41) est réalisée à l'extrémité opposée dudit arbre principal (31).

3. Outil selon l'une des revendications précédentes, **caractérisé en ce que** le diamètre externe de ladite partie filetée (41) est compris entre 25 et 35 mm et il comporte une partie filetée de profil triangulaire ayant un pas droit compris entre 3 et 6 mm et cinq entrées.

4. Outil selon l'une des revendications précédentes, **caractérisé en ce que** ladite partie mobile (5) entraîne deux lames mobiles (8,9) à profil circulaire en un mouvement de rotation autour d'un axe perpendiculaire à l'axe longitudinal de ladite partie filetée (41).

5. Outil selon la revendication 4, **caractérisé en ce que** l'une des lames (8,9) présente un pique câble (10) protubérant situé sensiblement au centre de ladite lame et relié à une tresse de mise à la terre.

6. Outil selon l'une des revendications 4 ou 5, **caractérisé en ce qu'**il comporte un dispositif de positionnement et de verrouillage (12) qui est monté pivotant, sous l'action d'au moins un ressort de rappel (15), selon un axe parallèle à l'axe de rotation desdites lames (8,9).

7. Outil selon l'une des revendications 4 à 6, **caractérisé en ce que** lesdites lames (8,9) sont aptes à réaliser une course comprise entre 80mm et 100 mm dans environ 60 secondes.

8. Outil selon l'une des revendications 4 à 7, **caractérisé en ce qu'**il comporte deux capteurs inductifs situés sur ledit boîtier (2) permettant de détecter la position d'ouverture et de fermeture des lames (8,9) qui sont reliés à une carte électronique (22) de commande du moteur électrique (23).

9. Outil selon la revendication 8, **caractérisé en ce que** ladite carte électronique (22) est réalisée de manière à pouvoir vérifier et commander l'état de charge de la batterie d'accumulateurs (4) avant d'autoriser la mise en marche de l'outil.

10. Outil selon l'une des revendications 8 ou 9, **caractérisé en ce qu'**il comporte un dispositif de commande à distance de la carte électronique (22).

## Patentansprüche

1. Tragbares elektromechanisches Werkzeug, ein Gehäuse (2) umfassend, das einen Gleichstrom-Elektromotor (23) einschließt, der von Akkumulatorbatterien (4) gespeist wird, ein mechanisches Getriebe (25), das von der Antriebswelle des besagten Motors angetrieben wird, das über eine Vorrichtung zur Umwandlung (40) der Rotationsbewegung des Motors (23) in eine Vorschubbewegung in Längsrichtung einen Arbeitskopf (3) betätigt, die auf den besagten Arbeitskopf (3) übertragen wird, **dadurch gekennzeichnet, dass** die besagte Vorrichtung zur Umwandlung (40) ein Planetenrollengewindegetriebe umfasst, wobei das besagte Gewindegetriebe einen Gewindeabschnitt (41) umfasst, der durch das besagte Getriebe zum Drehen gebracht wird, um die Bewegung über Planetenrollen (43) auf eine Gewindemutter (42) zu übertragen, die einen mobilen Abschnitt (5) des besagten Arbeitskopfes (3) in Vorschubrichtung antreibt.

2. Werkzeug nach Anspruch 1, **dadurch gekennzeichnet, dass** die Rotationsbewegung durch das mechanische Getriebe (25) auf eine Hauptwelle (31) übertragen wird, von der eines der Enden ein Antriebsritzel (30) umfasst, das die Bewegung eines Umlenkritzels (29) empfängt, das mit einem Motorritzel (28) des besagten Getriebes in Eingriff steht, und dadurch, dass der besagte Gewindeabschnitt (41) am entgegengesetzten Ende der besagten Hauptwelle (31) ausgeführt ist.

3. Werkzeug nach einem der vorherigen Ansprüche, **dadurch gekennzeichnet, dass** der Außendurchmesser des besagten Gewindeabschnitts (41) zwischen 25 und 35 mm beträgt und es einen Gewindeabschnitt mit einem Dreikantprofil umfasst, das eine gerade Steigung zwischen 3 und 6 mm und fünf Eingänge aufweist.

4. Werkzeug nach einem der vorherigen Ansprüche, **dadurch gekennzeichnet, dass** der besagte mobile Abschnitt (5) zwei mobile Klingen (8, 9) mit einem kreisförmigen Profil in eine Drehbewegung um eine Achse antreibt, die senkrecht zur Längsachse des besagten Gewindeabschnitts (41) verläuft.

5. Werkzeug nach Anspruch 4, **dadurch gekennzeichnet, dass** eine der Klingen (8, 9) einen hervorstehenden Kabelanschluss (10) aufweist, der in etwa der Mitte der besagten Klinge sitzt und mit einem Masseband verbunden ist.

6. Werkzeug nach einem der Ansprüche 4 oder 5, **dadurch gekennzeichnet, dass** es eine Positionierungs- und Verriegelungsvorrichtung (12) umfasst, die unter Einwirkung zumindest einer Rückholfeder (15) schwenkbar um eine Achse montiert ist, die parallel zur Rotationsachse der besagten Klingen (8, 9) verläuft.

7. Werkzeug nach einem der Ansprüche 4 bis 6, **dadurch gekennzeichnet, dass** die besagten Klingen (8, 9) in der Lage sind, in etwa 60 Sekunden einen Weg zwischen 80 mm und 100 mm zuruckzulegen.

8. Werkzeug nach einem der Ansprüche 4 bis 7, **dadurch gekennzeichnet, dass** es zwei auf dem besagten Gehäuse (2) angeordnete Induktivschalter umfasst, mit denen man die Öffnungs- und die Schließposition der Klingen (8, 9) erfassen kann, die mit einer Elektronikkarte (22) zur Steuerung des Elektromotors (23) verbunden sind.

9. Werkzeug nach Anspruch 8, **dadurch gekennzeichnet, dass** die besagte Elektronikkarte (22) derart ausgeführt ist, dass sie den Ladezustand der Akkumulatorbatterie (4) überprüfen und steuern kann, bevor das Einschalten des Werkzeugs freigegeben wird.

10. Werkzeug nach einem der Ansprüche 8 oder 9, **dadurch gekennzeichnet, dass** es eine Vorrichtung zum Fernsteuern der Elektronikkarte (22) umfasst.

## Claims

1. Portable electromechanical tool comprising a unit (2) enclosing a continuous current electric motor (23) powered by a storage battery (4), a mechanical reduction gear (25) driven by the output shaft of said motor that actuates a working head (3) by means of a device for converting (40) the rotary motion of the motor (23) into a longitudinal translation movement which is transmitted to said working head (3), **characterised in that** said device for converting (40) comprises a planetary roller screw, said screw comprising a threaded part (41) which is driven in rotation by said reduction gear to transmit motion via planetary rollers (43) to a threaded nut (42) that drives a mobile part (5) of said working head (3) in translation.

2. Tool according to claim 1, **characterised in that** the rotary motion is transmitted by the mechanical reduction gear (25) to a main shaft (31) of which one of the ends comprises a drive pinion (30) which receives the motion of a transfer pinion (29) which is engaged with a motor pinion (28) of said reduction gear, and **in that** said threaded part (41) is carried out at the end opposite said main shaft (31).

3. Tool according to one of the preceding claims, **characterised in that** the outer diameter of said threaded part (41) is between 25 and 35 mm and it comprises a threaded part with a triangular profile having a straight pitch between 3 and 6 mm and five inputs.

4. Tool according to one of the preceding claims, **characterised in that** said mobile part (5) drives two movable blades (8, 9) with a circular profile in a rotary motion around an axis perpendicular to the longitudinal axis of said threaded part (41).

5. Tool according to claim 4, **characterised in that** one of the blades (8, 9) has a protruding cable clamp (10) located substantially at the centre of said blade and connected to a grounding shield.

6. Tool according to one of claims 4 or 5, **characterised in that** it comprises a device for positioning and locking (12) that is pivotably mounted, under the action of at least one return spring (15), along an axis parallel to the axis of rotation of said blades (8, 9).

7. Tool according to one of claims 4 to 6, **characterised in that** said blades (8, 9) are able to carry out a course between 80mm and 100 mm in approximately 60 seconds.

8. Tool according to one of claims 4 to 7, **characterised in that** it comprises two inductive sensors located on said unit (2) making it possible to detect the open and closed position of the blades (8, 9) that are connected to an electronic card (22) for controlling the electric motor (23).

9. Tool according to claim 8, **characterised in that** said electronic card (22) is carried out in such a way as to be able to verify and control the state of charge of the storage battery (4) before authorising the tool to be turned on.

10. Tool according to one of claims 8 or 9, **characterised in that** it comprises a device for remotely controlling the electronic card (22).
